(19) Europäisches Patentamt

European Patent Office

Office européen des brevets

(11) EP 0 990 997 A1

(12) EUROPEAN PATENT APPLICATION

(43) Date of publication:
05.04.2000 Bulletin 2000/14

(51) Int. Cl.⁷: G06F 17/30

(21) Application number: 99203041.1

(22) Date of filing: 17.09.1999

(84) Designated Contracting States:
AT BE CH CY DE DK ES FI FR GB GR IE IT LI LU
MC NL PT SE
Designated Extension States:
AL LT LV MK RO SI

(30) Priority: 29.09.1998 US 162903

(71) Applicant: EASTMAN KODAK COMPANY
Rochester, New York 14650 (US)

(72) Inventors:
• Mehrotra, Rajiv
Rochester, New York 14650-2201 (US)
• Zhu, Wei
Rochester, New York 14650-2201 (US)
• Romer, Donna Marie
Rochester, New York 14650-2201 (US)

(74) Representative:
Parent, Yves et al
KODAK INDUSTRIE
Département Brevets - CRT
Zone Industrielle
B.P. 21
71102 Chalon-sur-Saône Cédex (FR)

(54) **A method for controlling and managing redundancy in an image database by elimination of automatically detected exact duplicate and near duplicate images**

(57) A method for processing a given database of digital images to create an image database without any exact duplicate image, the method comprises the steps of providing a database digital images; analyzing one or more digital image in the database to automatically extract depictive-feature based representations of the image; automatically detecting exact duplicate images in the provided database of digital images by comparing the depictive-feature based image representations of the digital images in the database; and automatically eliminating the redundant exact duplicate images to create a duplicate-image-free image database corresponding to the given database.

FIG. 1

EP 0 990 997 A1

## Description

**BACKGROUND OF THE INVENTION**

The number and size of digital image data collections are rapidly growing. Therefore, effective and efficient image data management technologies are essentially needed. Most of the current R&D efforts in image database management are concerned with similarity-based retrieval. Issues pertinent to the management of image data redundancy have been largely neglected. Like traditional databases, duplicated or redundant imagery data is undesirable in image databases.

Most content owners with several thousand digital images are concerned with exact duplicate image files. Duplicate images are introduced into image databases as the result of the ease with which image files can be copied from file systems, CD media or even other image database systems to a desktop in an organization. Multiple image files are often re-introduced into the same system where they originated. CD media, such as Photo CD's are often copied within an organization for easy distribution. When organizations establish image management systems, duplicates of the same file are often introduced into the management workflow. Whatever the source, the lack of an automated method for identifying and eliminating the duplicated imagery data is the key bottleneck in effectively managing large multimedia asset collections. For such a pre-existing collection of imagery data, it is critical to employ a method capable of automatically detecting and/or eliminating existing duplicated imagery data and thus resetting the base-line for the collection. This is hereinafter referred to as database cleansing. For a collection with the reset baseline (i.e., without any duplicated imagery data), a method that permits insertion of only new or non-duplicate imagery data into the collection is needed to ensure the collection never contains any redundant imagery data.

Another type of control and management of the digital imagery data redundancy is needed for collections that contain unintentional (undesirable) "near duplicates". A form of intentional (desirable) "near duplicates" is illustrated by a kind of image sequence called "similars". For example, in several creative applications, a photo shoot mostly results in a set of images called "similars". Usually, several frames of the same scene with minor variations in content are captured. The variations maximize the use of the scene content to meet the demands of a variety of customers. In other words, "similars" are valuable "near duplicates". In these applications, the value of a digital image collection is raised when content selection is purposeful and based on editorial guidelines. It is valuable for image collection owners to continually edit the contents of a digital image database to control and reduce data redundancy. While "similars" are an example of near duplicates that are desirable, there are others in this category that are not. For example, in some applications, it is valuable to be able to control the process of database population by only inserting the best version of an image into the database in relation to the other existing images that are substantially similar. Under certain conditions, it may be more valuable to add an image into a database in addition to the existing substantially similar images. In other cases, it is more valuable to reject the insertion of a new image into the database in relation to the existing images with substantially similar contents, and potentially delete some existing images within a "near duplicate" set that can be retired.

A random and haphazard selection of content will generally not be as marketable as one where the input has been filtered according to the selection behavior of a customer set or trends. Organizations need to make informed decisions about adding content to their digital collections. The most common existing practice is to manually detect duplicate and near duplicate images for removal from or insertion into the database by purely visual methods. An obvious automatic method derivable from the prior art in image processing would perform pixel-by-pixel comparisons of every pair of images in a database to detect exact or near duplicate images. This process is computationally expensive and unacceptable for large image collections.

A method capable of automatically and efficiently detecting "similar" or "near duplicate" images and performing user-directed database update operations is needed to assist in creating and maintaining a valuable or purposeful digital image data collection.

**SUMMARY OF THE INVENTION**

The present invention is directed to overcoming one or more of the problems set forth above. Briefly summarized, according to one aspect of the present invention, the invention resides in a method for processing a given database of digital images to create an image database without any exact duplicate image, the method comprising the steps of (a) providing a database of digital images; (b) analyzing one or more digital image in the database to automatically extract depictive-feature based representations of the image; (c) automatically detecting exact duplicate images in the provided database of digital images by comparing the depictive-feature based image representations of the digital images in the database; and (d) automatically eliminating the redundant exact duplicate images to create a duplicate-image-free image database corresponding to the given database.

An object of the present invention is to provide a method for searching a database of images to detect duplicates and near duplicates of any given image.

A further object of the present invention is to provide a method for automatically processing an image database to create a base-line image database without any duplicate images.

A still further object of the present invention is to provide a method for user-directed editing of the database for controlling redundancy of images.

In addition, an object of the present invention is to provide a method to manage insertion of an image into an existing duplicate-image-free image database by automatically detecting if the input image is an exact duplicate of an existing image in the database, and permitting insertion of only non-duplicate images.

Finally, an object of the present invention is to provide a method to enable user control of the image insertion process by automatically detecting the near duplicates of an input image and performing the user-directed database update operations.

These and other related objects will become clear from a review of the following description of the preferred embodiments, and appended claims.

## BRIEF DESCRIPTION OF THE DRAWINGS

FIG. 1 is a flowchart illustrating the creation of a base-line digital image database without any exact duplicate images by automatic detection and elimination of exact duplicate images;

FIG. 2 is a flowchart illustrating the automatic search of a base-line digital image database to detect an exact duplicate of a given image;

FIG. 3 is a flowchart illustrating the creation of a base-line digital image database with controlled data redundancy by (a) automatic detection and elimination of exact duplicate images, (b) automatic detection of near duplicate images, and (c) user-directed elimination of undesired near duplicate images;

FIG. 4 is a flowchart illustrating the automatic search of a base-line database with controlled redundancy to detect exact duplicate and near duplicates of a given image;

FIG. 5 is a flowchart illustrating the user-directed control of data redundancy in a digital image database; and,

FIG. 6 is a flowchart illustrating the insertion of a digital image into a base-line digital image database.

## DETAILED DESCRIPTION OF THE INVENTION

In the following description, the present invention will be described in the preferred embodiment as a software program. Those skilled in the art will readily recognize that the equivalent of such software may also be constructed in hardware. Such a software program may be utilized on any computer system, and since such systems are well known in the art, they will not be discussed in detail herein.

The software program may be stored on any computer readable storage medium. As used herein, computer readable storage medium may comprise, for example; magnetic storage media such as a magnetic disk (such as a floppy disk) or magnetic tape; optical storage media such as an optical disc, optical tape, or machine readable bar code; solid state electronic storage devices such as random access memory (RAM), or read only memory (ROM); or any other physical device or medium employed to store a computer program.

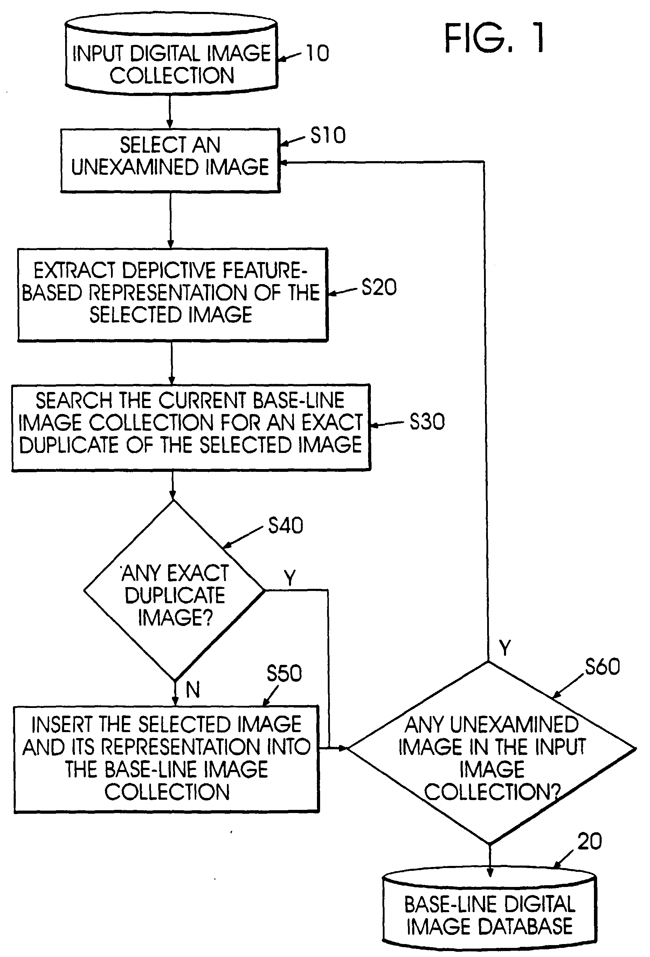

The main source of data redundancy in an image database is duplicate images. Therefore, the management and control of data redundancy in an image database essentially requires detection and elimination of duplicate images. A computer-implemented method to process an existing digital image collection 10 to create a base-line image database 20 that contains no duplicated images is shown in FIG. 1. The overall process starts with an initially empty base-line image database 20. Each image of the given image collection 10 is selected S10 to determine if it could be added to the base-line database without creating any redundancy. To perform the redundancy check, the selected image is processed to extract its depictive feature-based representation S20. Color, color composition, and color texture features (defined hereinbelow) are used in the preferred image representation scheme as the depictive features. The preferred color content-based representation scheme represents an image by a set of dominantly occurring colors of coherent color regions. Each such color is represented by its color value in a predetermined color space and the frequency of occurrence of that color in the coherent color regions of the image. A pixel of color C belongs to a coherent color region if a significant number of its neighboring pixels are also of color C. The preferred color composition-based representation scheme associates with each dominantly occurring coherent color R, a set of coherent colors that are connected to R. Connected colors of a color R are the colors of the coherent color regions that are adjacent to, surround, or are surrounded by the coherent color regions of color R. The preferred texture-based image representation scheme represents an image by the set of dominantly occurring color transitions. Each such color transition is represented by a pair of associated color values in a predetermined color space and a set of statistical properties, like average, max, min, and variance/co-variance, derived from the gradient directions at the transition, and the distances between the color transitions. In the present implementation, any combination of the above color, color composition, and texture representations can be employed to represent an image. For example, an integrated color and color composition image representation represents an image by a set of dominantly occurring coherent colors. Associated with each dominant coherent color is a set of connected dominant coherent colors. Each coherently colored region is in turn represented by its color value and frequency of occurrence. This image representation can by augmented by adding color texture features to obtain an integrated representation based on all three depictive features. Those skilled in art would recognize that other depictive feature-based image representations are possible within the scope of this invention. Such representations can be automatically extracted by processing an image. Some example of texture-based representation and extraction methods can be found in *Computer and Robot Vision, Vol. I, by R. M. Haralick, and L.G. Shapiro, Addison -Wesley Publishing Co., 1992, Chapter 9, pp. 453-481.* An example of color and color composition-based representation and extraction can be found in *FOCUS: Searching for Multi-colored Ob]ects in a Diverse Image Database by M. Das, E.M. Rise, and B.A. Draper, IEEE 1063-6919, 1997.* In the present implementation, an image is tessellated into non-overlapping sections. For each section, the dominantly occurring coherent colors are found by locating the local maxima of the coherent color histogram of the section. The color corresponding to a local maximum of the histogram with the number of pixel greater than a predefined threshold is considered a dominantly occurring coherent color. The preferred threshold is 1% of the total number of pixels in the image section. Alternatively, a dominantly occurring coherent color is a color with a significant number of pixels in the coherent color histogram of the image. The dominantly occurring colors within a section and the neighboring sections are considered connected. For locating dominantly occurring color transitions, local color extrema or color edge pixels within each section of the image are identified. The colors of a pair of neighboring extrema/edge pixels define a color pair corresponding to a transition. The frequency of co-occurring color pairs within each segment and their associated properties are analyzed to compute the texture-based representation. The extracted image representation is used to search the current base-line image collection to determine if the base-line database contains an exact duplicate of the selected image S30. If an exact duplicate is found S40 in the base-line database, the selected image is not added to the base-line database. Otherwise, the selected image and it image representation is as added to the base-line image database S50. The above process of selecting and processing an image of the given digital image collection is repeated for every image of the collection. The base-line image database obtained after processing all the images of the given collection is free of the data redundancy caused by duplicate images.

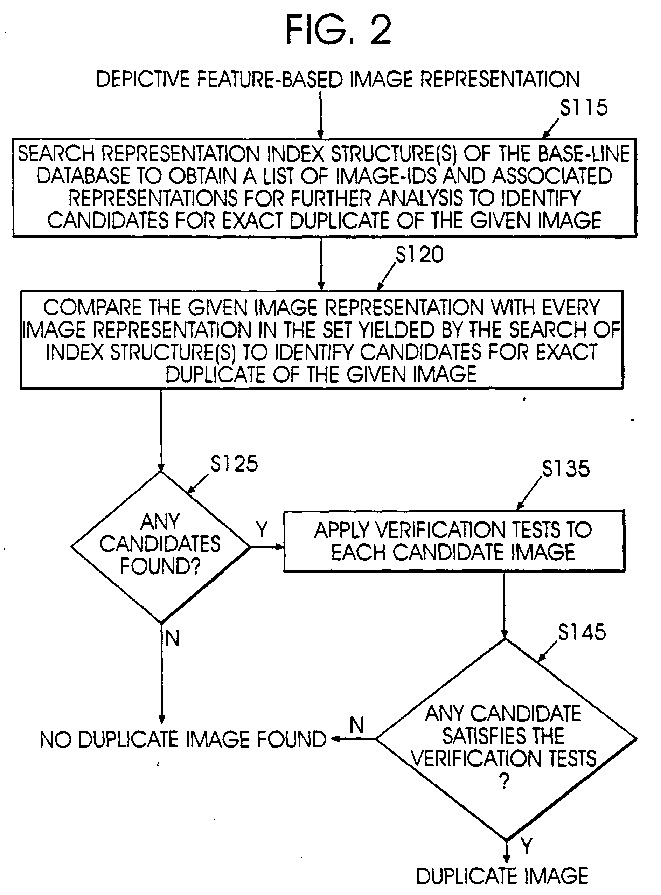

The process of base-line database search for a duplicate image involves identifying images with the exact same representation as the selected image. To facilitate this search, the base-line database 20 also contains the representation of every stored image. In the present implementation, a search method based on the "hypothesize and test" paradigm is employed for the duplicate image detection. This search process is shown in FIG. 2. In this approach, the representations of images in the base-line database 20 are organized in one or more index structures described below. These representation index structures are searched to obtain a set of image-ids and associated image representation for further analysis to identify the images that are candidates for the duplicate of the selected image S115. Every image representation in this set is compared with the representation of the selected image S120. An image having a representation that exactly matches the selected image representation is considered a candidate for the duplicate of the selected image. If any candidate for a duplicate image of the selected image is found S125, then the validity of each candidate is verified S135. To verify S135 if a candidate images A is actually a duplicate of the selected image B, the image A is retrieved from the base-line database 20 and compared with the selected image B by doing a pixel by pixel difference computation using the measure $D = \Sigma |A(i,j) - B(i,j)|$, $i = 1, N$ and $j = 1, M$, where $A(i,j)$ is the color of the pixel at location $(i,j)$ of the candidate image A, $B(i,j)$ is the color of the pixel at location $(i,j)$ of the selected image B, and the two images are of size $NxM$. Image A is an exact duplicate of B only if $D = 0$. Any candidate that satisfies this verification test is an exact duplicated of the selected image S145. Note that the images can be scaled down to a desired size for the extraction of depictive feature-based representation and verification test.

Any multi-dimensional point or spatial access method can be used to organize the image representation. Examples of such index structures include KD-B tree, R-tree and its variants, buddy tree, and grid file. In the present implementation, two separate 2-dimensional R-tree based point access methods are employed to organize the image representations. One of these structures organizes the image representations based on the dominantly occurring coherent colors and the other organizes the image representations based on the color texture properties. The total number K of unique dominantly occurring coherent colors in an image makeup the first dimension of the coherent color-based index structure and a color function of those color values form the second dimension. The total number K of unique dominantly occurring color pairs in an image forms the first dimension of the texture-based-index structure and the second dimension of the index is a color function of those color pair values. The preferred color function in both cases is of the form $[\Sigma(C_i)^2]^{1/2}$, $i = 1, n$, where $n$ is the number of unique dominant coherent colors or dominant color-pairs (color transitions) selected using a predetermined scheme from the set of K unique dominant coherent colors or dominant color pairs (transitions) found in the image, and $C_i$ is the value of the $i$-th color or color pair. In the present implementation, if, the total number of unique dominant coherent colors or color pairs (transitions) found in an image is less than a predefined maximum T, then all color or color pairs (transitions) values are used in the computation of the color-based function. Otherwise, the T most dominant coherent colors or color pairs (transitions) are used in the computation of the color function for index location. Note that multiple sets of T most dominant coherent colors or color pairs (transitions) can be formed for an image then each such set of colors or color pairs (transition) is used to form the 2-dimensional point representation of that image. In the current implementation, T can be any value between 4 and 8. Each such 2-dimensional representation is added to the index. Associated with each leaf node of each index structure is a list of(image id, associated complete image representation) pairs. The representation of the selected image is used to search one or both of these index structures to identify images having the matching 2-dimensional representation. The preferred search scheme is to search the coherent color-based index, if the representation of the selected image contains one or more coherently colored regions. The texture-based index is searched in the present implementation only if the selected image representation contains no coherently colored regions. An option also exists to search both the index structures and perform an intersection of the set of image ids obtained by the two searches. The list of image ids and their image representations pointed to by every leaf node where a search terminates is further analyzed to identify images having a depictive feature-based representation that exactly matches the representation of the selected image. These images form the set of candidate images for the duplicate of the selected image. Those skilled in art would recognize that index structures are dependent on the image representation scheme and therefore other representation schemes and associated index structures can be utilized to detect duplicates within the scope of this invention. Also, note that an index structure can be entirely or partially resident in the primary and/or secondary storage of a computer.

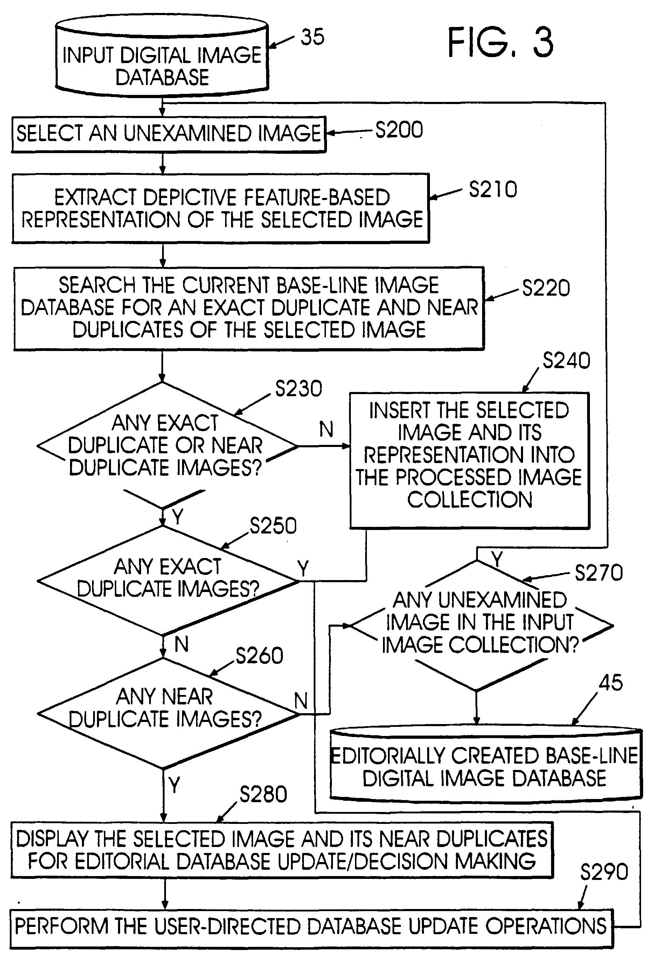

Near duplicate images also result in data redundancy in an image database. Editorial selection of the near duplicates is essential to maintain the most valuable or marketable image collection while controlling the redundancy. A computer-implemented method that assists in the editorial creation of a base-line image database from a given digital image collection is shown in FIG. 3. Given a base-line collection 35, each image in the collection is selected S200 and processed. The processing starts with the automatic extraction of a depictive feature-based image representation of the selected image S210. In the present embodiment of this method, the integrated color, color composition, and texture-based image representation scheme described above is employed. The extracted representation is used to search the current base-line database for the candidates for exact and near duplicates of the selected images S220. In the preferred implementation, the 2-dimensional R-tree based point access methods described above are employed to organize the representation of the images in the base-line database. Therefore, index-based searches are used to identify the candidates for exact and near duplicates of the selected image.

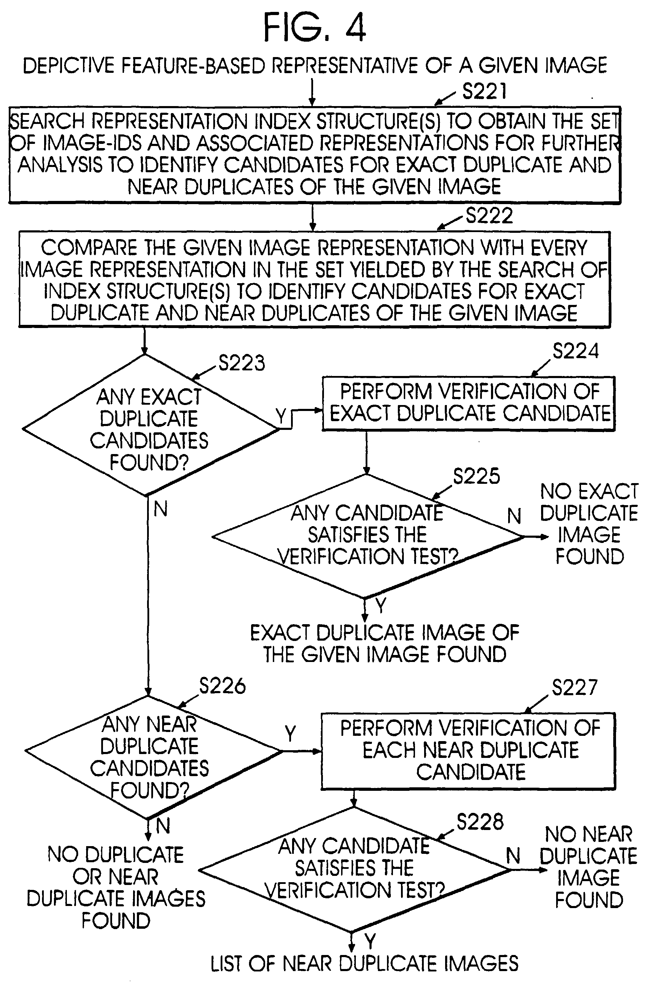

The process of index-based search of the base-line digital image database is shown in FIG. 4. Given the extracted representation of the selected image, the appropriate index structures are searched for images with the same 2-dimensional point representation S221. The set of image ids and associated representations pointed to by leaf nodes where the search terminates is obtained. Every image representation in this set maps to the same two-dimensional point representation as the selected image. The image representations in this set are further analyzed to identify candidates for exact duplicate and near duplicates of the selected image S222. The preferred embodiment assumes that the nearly duplicate images have the same set of dominantly occurring colors, connected colors, and dominant co-occurring color pairs. But they may differ slightly in frequency of occurrence of dominant colors, the sizes of connected colors, and the texture properties. To identify the candidates for duplicates and near duplicates of the selected image S, two options are available in the preferred embodiment. The first options compares S to each image I in the set of images obtained by the representation index search with respect to each depictive feature-based representation (i.e., color, color-composition, and color-texture). An image I is considered a candidate for near duplicate of S if for every feature $f$, $D_f(I_f, S_f) < H_f$, where $D_f(I_f, S_f)$ is the distance between feature $f$-based representations of I and S, and $H_f$ is the corresponding threshold. The preferred value of a $H_f$ is 0.95 for a $D_f$ which yields a value of 1 for the best match. The preferred value of a $H_f$ is 0.05 for a $D_f$ which yields a value of 0 for the best match. The second option for identifying exact and near duplicate candidates compares the integrated representation of the selected image S is compared with the integrated representation of each image I in the set of images obtained by the representation index search. In the preferred embodiment, the distance function used is of the form $V(I, S) = \Sigma \omega_z * diff(I_z, S_z)$, where $z$ is an element in the image representation, $I_z$ and $S_z$ are the values of property $z$ in the representations of the image I and the selected image S, respectively, $diff$ is a distance function that measures the difference between $I_z$ and $S_z$, and $\omega_z$ is the weight of the property $z$ such that the sum of all weights is 1. The summation is done over all properties in the image representation. In our implementation, the $diff$ function results in a maximum value of 1 for the exact match and a minimum value of 0 for the worst match. An image I with the value of $V(I, S)$ less than a predefined threshold, preferably 0.95, is considered a near duplicate of the image S. A near duplicate candidate P is a candidate for an exact duplicate of S, if the value of $V(P, S)$ equals 1. Those skilled in art would recognize that other distance functions can be used for the computation of $V(\ )$ within the scope of this invention. If an exact duplicate candidate is found S223, the verification test described earlier is applied to an exact duplicate candidate of the selected image S224. If an exact duplicate candidate satisfies the verification test S225, it is removed from the set of near duplicates to obtain the set of true near duplicates. If there are any true near duplicate candidates S226, a verification method can be optionally employed to test the validity of a true near duplicate S227-S228 to obtain the final list of true near duplicates of the selected image. In the preferred embodiment, the validity of a true near duplicate candidate is verified by comparing the color histograms of a

$$Z(c,s)= \sum_{n=1}^{N} \left| \frac{H_c(n)}{\Omega_c} - \frac{H_s(n)}{\Omega_s} \right|$$

true near duplicate candidate $c$ and the selected image $s$ using the distance metric.

Where $H_g(n)$ denotes the number of pixels of color $n$ in image $g$ of size $\Omega_g$ and $N$ is total number of colors in the histogram. An image $c$ is verified to be a near duplicate if $Z(c,s) < \Theta$, where $\Theta$ is a predefined threshold. The preferred value of $\Theta$ is 0.05.

Referring back to FIG. 3, if no true near duplicate or exact duplicate is found S230 in the current-based database, the selected image and its representation are added to the base-line database S240. If an exact duplicate is found S250 in the base-line database, the selected image is not added to the base-line database. If any true near duplicate is found S260 then all the true near duplicate images are retrieved and displayed or output along with the selected image for the editorial database update decision making process S280. Then the user directed base-line database update operations are performed S290. The process of selecting and processing an image of the given digital image collection is repeated for every image of the collection. The base-line image database 45 obtained after processing all the images of the given collection doesn't contain any duplicate images and has a editorially controlled redundancy caused by the selected near duplicates. An image database without any exact duplicate images and with user selected or desired near duplicate images is referred to as an image database with controlled redundancy. The display of the near duplicates S280 and editorial base-line database update S290 can be either interactive or off-line. The above steps are repeated for every image in the given collection. Note that the information about the sets of detected near duplicate images can be optionally stored in the system to reduce the computation cost of fixture searches for near duplicate images. In this case, if an image $p$

belonging to a set $\beta$ of near duplicate images is found to be a "near duplicate" of any given image $k$ then all the images in the set $\beta$ are considered to be the near duplicate images of the image $k$ without any further analysis.

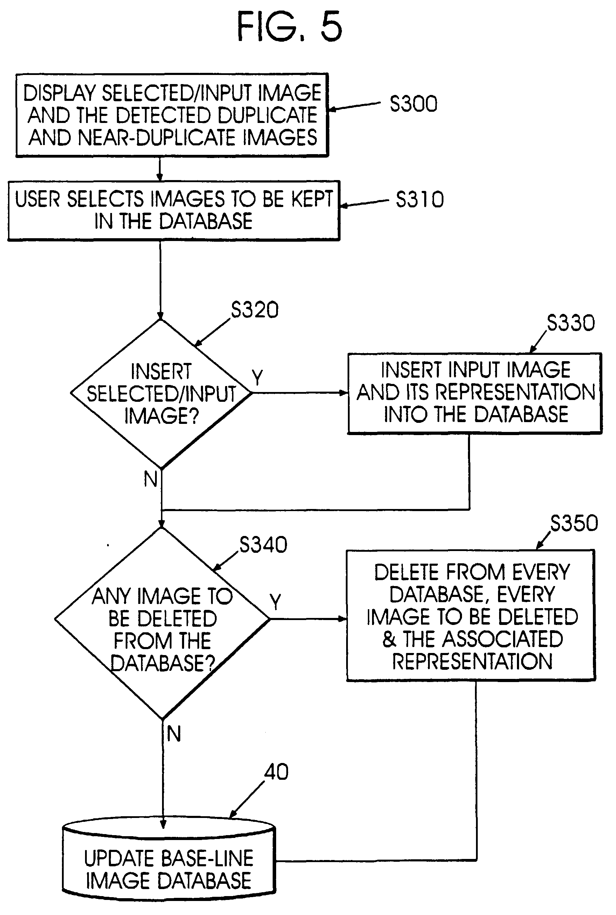

The key steps of the user-directed base-line database update process are shown in FIG. 5. The selected image and the detected true near duplicates are displayed or output for the user's review and decision making S300. The user selects one or more displayed images to be stored in or deleted from the database S310. If the user elects to store the selected image S320, the selected image and its representation is added to the base-line database S230. Otherwise, if the user elects to delete any of the existing near duplicate image from the current base-line database S340, then that image and the associated representation are deleted from the current-based line database S350. Note that any format of displaying the selected image and its near duplicates and obtaining the user feedback for database update operations are within the scope of this invention.

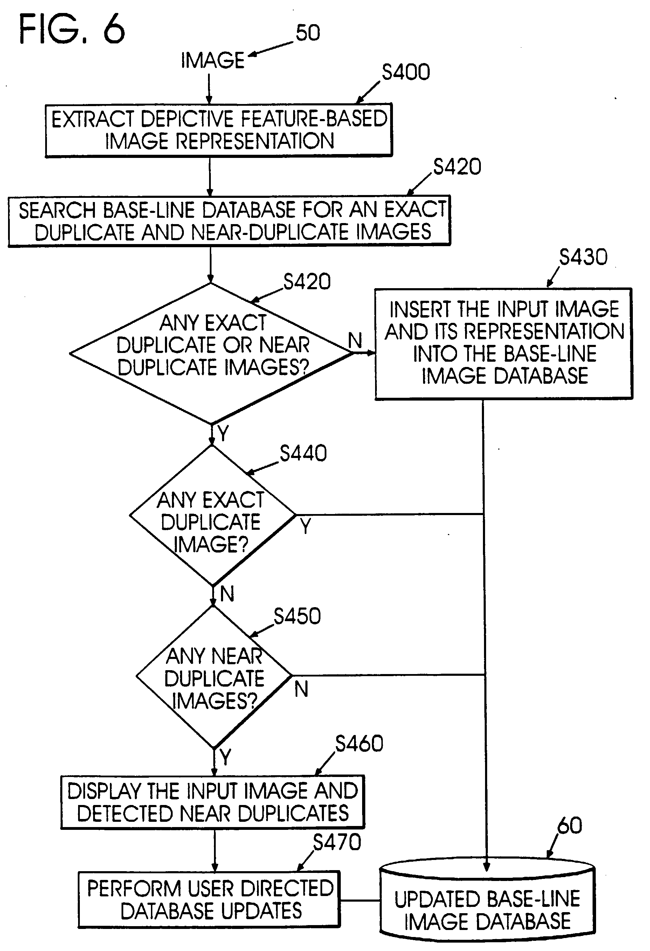

Once the base-line database is created from a given digital image collection, the insertion of additional images needs to be managed to maintain the controlled data redundancy of the base-line database. A computer-implemented image insertion management method employed in the preferred embodiment is summarized in FIG. 6. An image 50 to be inserted is provided. It's depictive feature-based representation is computed S400. The current base-line digital image database is searched to find exact or near duplicates S410. If no exact or near duplicates of the input image are found S420, then the image and its representation are added to the base-line database S430. If an exact duplicate of the input image is found S440 in the base-line database, the input image is not added to the base-line database. If one or more near duplicates are found S450, then the input image and the detected near duplicates are output or displayed for user's review and feedback S460. The user directed base-line database update operations are performed S470 to obtained the updated base-line image database 60.

Other aspects of the invention include:

1. The method wherein the step of automatically detecting exact duplicate images in the provided database of digital images by comparing the depictive-feature based image representations of the digital images in the database includes identifying candidates for exact duplicate images and verifying the candidacy.

2. The method wherein the step of analyzing one or more digital image in the database to automatically extract depictive-feature based image representations of the image further comprising the step of organizing the depictive-feature based representations of digital images in an index structure.

3. The method wherein the step of automatically detecting exact duplicate images in the provided database of digital images by comparing the depictive-feature based image representations of the digital images in the database further comprising the step of searching an index structure containing depictive feature based representations of digital images to detect exact duplicate images.

4. The method wherein the step of automatically detecting exact duplicate images in the provided database of digital images by comparing the depictive-feature based image representations of the digital images in the database includes identifying candidates for exact duplicate images and verifying the candidacy.

5. The method wherein the step of automatically detecting near duplicate images in the provided database of digital images by comparing the depictive-feature based image representations of the digital images in the data base includes identifying candidates for near duplicate images and verifying the candidacy.

6. The method wherein the step of eliminating the redundant exact duplicate images and the undesired near duplicate images to obtain an image database with controlled redundancy further comprising the step of updating an index structure containing depictive-feature based representations of digital images in the database to account for the elimination of the redundant exact duplicate images and the undesired near duplicate images.

7. The method further comprising using individually or any combination of color, color composition and texture as the depictive feature to represent the digital image.

8. The method as in claim 14 further comprising using individually or any combination of color, color composition and texture as the depictive feature to represent the digital image.

9. The method wherein the step of representing every digital image in the database in terms of the associated depictive features further comprising the step of employing an index structure to organize the depictive-feature based representations of digital images in the database.

10. A method wherein the step of identifying an image in the provided database with depictive feature-based representation that substantially matches the depictive feature-based representation of the given image to generate the set of candidates for duplicates further comprising the step of searching an index structure containing depictive feature based representations of digital images to identify candidates for exact duplicate images of the given image.

11. The method further comprising using individually or any combination of color, color composition and texture as the depictive feature to represent the digital image.

12. A method to manage and control the data redundancy caused by the insertion a digital image into a digital image database, the method comprising the steps of:

    (a) providing a database of digital images without any exact duplicated images;
    (b) representing every image in the database in terms of the associated depictive features;
    (c) providing an input digital image to be added to the database;
    (d) analyzing the input digital image to automatically extract depictive-feature based image representations of the image;
    (e) automatically detecting the exact and near duplicate digital images in the provided image database with respect to the digital image to be inserted by comparing the depictive-feature based image representations of the digital image to be inserted with the depictive feature-based representation of the digital images in the database; and
    (f) adding the digital image to be inserted only if the digital image is not redundant.

13. The method wherein the step of representing every image in the database in terms of the associated depictive features further comprising the step of employing an index structure to organize the depictive-feature based representations of digital images in the database.

14. A method wherein the step of automatically detecting the exact and near duplicate digital images in the provided image database with respect to the digital image to be inserted by comparing the depictive-feature based image representations of the digital image to be inserted with the depictive feature-based representation of the digital images in the database further comprising the step of searching an index structure containing depictive feature based representations of digital images to identify exact duplicate and near duplicate images of the given image.

15. The method wherein the step of automatically detecting the exact and near duplicate digital images in the provided image database with respect to the digital image to be inserted by comparing the depictive-feature based image representations of the digital image to be inserted with the depictive feature-based representation of the digital images in the database includes identifying candidates for exact duplicate images and verifying the candidacy.

16. The method wherein the step of automatically detecting the exact and near duplicate digital images in the provided image database with respect to the digital image to be inserted by comparing the depictive-feature based image representations of the digital image to be inserted with the depictive feature-based representation of the digital images in the database includes identifying candidates for near duplicate images and verifying the candidacy.

17. The method further comprising using individually or any combination of color, color composition and texture as the depictive feature to represent the digital image.

**Claims**

1. A method for processing a given database of digital images to create an image database without any exact duplicate image, the method comprising the steps of:

   (a) providing a database digital images;
   (b) analyzing one or more digital image in the database to automatically extract depictive-feature based representations of the image;
   (c) automatically detecting exact duplicate images in the provided database of digital images by comparing the depictive-feature based image representations of the digital images in the database; and,
   (d) automatically eliminating the redundant exact duplicate images to create a duplicate-image-free image database corresponding to the given database.

2. A method as in claim 1 wherein step (b) further comprising the step of organizing the depictive-feature based representations of digital images in an index structure.

3. A method as in claim 2 wherein step (c) further comprising the step of searching an index structure containing depictive feature based representations of digital images to detect exact duplicate images.

4. A method as in claim 3 wherein step (d) further comprising the step of updating an index structure containing depictive -feature based representations of digital images in the database to account for the elimination of a redundant exact duplicate image.

5. The method as in claim 1 further comprising using individually or any combination of color, color composition and texture as the depictive feature to represent the digital image.

6. A method for processing a given database of digital images to assist in the creation of an image database without any exact duplicate images and containing desired near duplicate images, the method comprising the steps of:

   (a) providing a database of digital images;
   (b) analyzing one or more digital image in the database to automatically extract depictive-feature based image representations of the image;
   (c) automatically detecting exact duplicate images in the provided database of digital images by comparing the depictive-feature based image representations of the digital images in the database;
   (d) automatically detecting near duplicate images in the provided database of digital images by comparing the depictive-feature based image representations of the digital images in the database; and,
   (e) eliminating the redundant exact duplicate images and the undesired near duplicate images to obtain an image database with controlled redundancy.

7. A computer implemented method to automatically, detect duplicates of a given image in a given digital image database, the method comprising the steps of:

   (a) providing a database of digital images;
   (b) representing every digital image in the database in terms of the associated depictive features;
   (c) representing the given digital image in terms of the associated depictive features;
   (d) identifying an image in the provided database whose depictive feature-based representation that substantially matches the depictive feature-based representation of the given image to generate the set of candidates for duplicates; and,
   (e) identifying the exact duplicate images from the set of candidates obtained in step (d).

8. The method as in claim 7 wherein step (b) further comprising the step of employing an index structure to organize the depictive-feature based representations of digital images in the database.

**9.** A method as in claim 8 wherein step (d) further comprising the step of searching an index structure containing depictive feature based representations of digital images to identify candidates for exact duplicate images of the given image.

**10.** A method to automatically, detect near duplicates of a give image in a given digital image database, the method comprising the steps of:

(a) providing a database of digital images;
(b) representing every digital image in the database in terms of the associated depictive features;
(c) representing the given image in terms of the associated depictive features;
(d) identifying an image in the provided database with depictive feature-based representation that substantially matches the depictive feature-based representation of the given image to generate the set of candidates for duplicates; and,
(e) identifying the near duplicate images from the set of candidates obtained in step (d).

FIG. 1

INPUT DIGITAL IMAGE COLLECTION — 10

↓

SELECT AN UNEXAMINED IMAGE — S10

↓

EXTRACT DEPICTIVE FEATURE-BASED REPRESENTATION OF THE SELECTED IMAGE — S20

↓

SEARCH THE CURRENT BASE-LINE IMAGE COLLECTION FOR AN EXACT DUPLICATE OF THE SELECTED IMAGE — S30

↓

S40 — ANY EXACT DUPLICATE IMAGE?  Y

N

S50 — INSERT THE SELECTED IMAGE AND ITS REPRESENTATION INTO THE BASE-LINE IMAGE COLLECTION

ANY UNEXAMINED IMAGE IN THE INPUT IMAGE COLLECTION? — S60  Y

BASE-LINE DIGITAL IMAGE DATABASE — 20

# FIG. 2

DEPICTIVE FEATURE-BASED IMAGE REPRESENTATION

S115

SEARCH REPRESENTATION INDEX STRUCTURE(S) OF THE BASE-LINE DATABASE TO OBTAIN A LIST OF IMAGE-IDS AND ASSOCIATED REPRESENTATIONS FOR FURTHER ANALYSIS TO IDENTIFY CANDIDATES FOR EXACT DUPLICATE OF THE GIVEN IMAGE

S120

COMPARE THE GIVEN IMAGE REPRESENTATION WITH EVERY IMAGE REPRESENTATION IN THE SET YIELDED BY THE SEARCH OF INDEX STRUCTURE(S) TO IDENTIFY CANDIDATES FOR EXACT DUPLICATE OF THE GIVEN IMAGE

S125

ANY CANDIDATES FOUND?

Y

S135

APPLY VERIFICATION TESTS TO EACH CANDIDATE IMAGE

N

S145

ANY CANDIDATE SATISFIES THE VERIFICATION TESTS ?

N

NO DUPLICATE IMAGE FOUND

Y

DUPLICATE IMAGE

# FIG. 3

INPUT DIGITAL IMAGE DATABASE — 35

SELECT AN UNEXAMINED IMAGE ← S200

EXTRACT DEPICTIVE FEATURE-BASED REPRESENTATION OF THE SELECTED IMAGE — S210

SEARCH THE CURRENT BASE-LINE IMAGE DATABASE FOR AN EXACT DUPLICATE AND NEAR DUPLICATES OF THE SELECTED IMAGE — S220

S230 — ANY EXACT DUPLICATE OR NEAR DUPLICATE IMAGES?

S240 — INSERT THE SELECTED IMAGE AND ITS REPRESENTATION INTO THE PROCESSED IMAGE COLLECTION

Y

S250 — ANY EXACT DUPLICATE IMAGES?

S270 — ANY UNEXAMINED IMAGE IN THE INPUT IMAGE COLLECTION?

S260 — ANY NEAR DUPLICATE IMAGES?

45 — EDITORIALLY CREATED BASE-LINE DIGITAL IMAGE DATABASE

S280 — DISPLAY THE SELECTED IMAGE AND ITS NEAR DUPLICATES FOR EDITORIAL DATABASE UPDATE/DECISION MAKING

S290 — PERFORM THE USER-DIRECTED DATABASE UPDATE OPERATIONS

# FIG. 4

DEPICTIVE FEATURE-BASED REPRESENTATIVE OF A GIVEN IMAGE

↓ ⟋S221

SEARCH REPRESENTATION INDEX STRUCTURE(S) TO OBTAIN THE SET OF IMAGE-IDS AND ASSOCIATED REPRESENTATIONS FOR FURTHER ANALYSIS TO IDENTIFY CANDIDATES FOR EXACT DUPLICATE AND NEAR DUPLICATES OF THE GIVEN IMAGE

⟋S222

COMPARE THE GIVEN IMAGE REPRESENTATION WITH EVERY IMAGE REPRESENTATION IN THE SET YIELDED BY THE SEARCH OF INDEX STRUCTURE(S) TO IDENTIFY CANDIDATES FOR EXACT DUPLICATE AND NEAR DUPLICATES OF THE GIVEN IMAGE

S223 — ANY EXACT DUPLICATE CANDIDATES FOUND?

Y → S224 PERFORM VERIFICATION OF EXACT DUPLICATE CANDIDATE

N

S225 — ANY CANDIDATE SATISFIES THE VERIFICATION TEST?

N → NO EXACT DUPLICATE IMAGE FOUND

Y → EXACT DUPLICATE IMAGE OF THE GIVEN IMAGE FOUND

S226 — ANY NEAR DUPLICATE CANDIDATES FOUND?

Y → S227 PERFORM VERIFICATION OF EACH NEAR DUPLICATE CANDIDATE

N → NO DUPLICATE OR NEAR DUPLICATE IMAGES FOUND

S228 — ANY CANDIDATE SATISFIES THE VERIFICATION TEST?

N → NO NEAR DUPLICATE IMAGE FOUND

Y → LIST OF NEAR DUPLICATE IMAGES

# FIG. 5

```
┌──────────────────────────────┐
│ DISPLAY SELECTED/INPUT IMAGE │ ◄──── S300
│ AND THE DETECTED DUPLICATE   │
│ AND NEAR-DUPLICATE IMAGES    │
└──────────────────────────────┘
              │
              ▼
┌──────────────────────────────┐
│ USER SELECTS IMAGES TO BE KEPT│ ◄──── S310
│ IN THE DATABASE              │
└──────────────────────────────┘
              │
              ▼
          S320
         ╱────╲                              S330
        ╱      ╲                    ┌──────────────────────┐
       ╱ INSERT ╲      Y            │ INSERT INPUT IMAGE   │
       ╲SELECTED/INPUT╱ ──────────► │ AND ITS REPRESENTATION│
        ╲ IMAGE? ╱                  │ INTO THE DATABASE    │
         ╲────╱                     └──────────────────────┘
           │ N                                 │
           ▼                                   │
          S340                                 │
         ╱────╲                              S350
        ╱ ANY  ╲                    ┌──────────────────────┐
       ╱IMAGE TO╲     Y             │ DELETE FROM EVERY    │
      ╱ BE DELETED ╲ ───────────►   │ DATABASE, EVERY      │
       ╲FROM THE  ╱                 │ IMAGE TO BE DELETED  │
        ╲DATABASE?╱                 │ & THE ASSOCIATED     │
         ╲────╱                     │ REPRESENTATION       │
           │ N                      └──────────────────────┘
           ▼                                   │
          40                                   │
     ╭──────────────╮                          │
     │ UPDATE BASE-LINE │ ◄────────────────────┘
     │ IMAGE DATABASE │
     ╰──────────────╯
```

14

# FIG. 6

IMAGE `50`

EXTRACT DEPICTIVE FEATURE-BASED IMAGE REPRESENTATION `S400`

SEARCH BASE-LINE DATABASE FOR AN EXACT DUPLICATE AND NEAR-DUPLICATE IMAGES `S420`

ANY EXACT DUPLICATE OR NEAR DUPLICATE IMAGES? `S420`

INSERT THE INPUT IMAGE AND ITS REPRESENTATION INTO THE BASE-LINE IMAGE DATABASE `S430`

ANY EXACT DUPLICATE IMAGE? `S440`

ANY NEAR DUPLICATE IMAGES? `S450`

DISPLAY THE INPUT IMAGE AND DETECTED NEAR DUPLICATES `S460`

PERFORM USER DIRECTED DATABASE UPDATES `S470`

UPDATED BASE-LINE IMAGE DATABASE `60`

**European Patent Office**

## EUROPEAN SEARCH REPORT

Application Number

EP 99 20 3041

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | DOERMANN D. ET AL.: "The Detection of Duplicates in Document Image Databases" PROC. FOURTH INT. CONF. ON DOCUMENT ANALYSIS AND RECOGNITION, vol. 1, 18 - 20 August 1997, pages 314-318, XP002124647 Ulm,Germany | 1-4,7-9 | G06F17/30 |
| Y | * page 314, left-hand column, line 15 - page 306, right-hand column, line 13; figures 1,2 * | 5 | |
| A | | 6,10 | |
| X | BABU M MEHTRE ET AL: "COLOR MATCHING FOR IMAGE RETRIEVAL" PATTERN RECOGNITION LETTERS,NL,NORTH-HOLLAND PUBL. AMSTERDAM, vol. 16, no. 3, March 1995 (1995-03), page 325-331 XP000500602 ISSN: 0167-8655 | 10 | |
| A | * page 325, left-hand column, line 1 - page 328, right-hand column, line 9; figure 1 * | 6 | |
| Y | | 5 | TECHNICAL FIELDS SEARCHED (Int.Cl.7) G06F |
| A | SMITH J R ET AL: "SINGLE COLOR EXTRACTION AND IMAGE QUERY" PROCEEDINGS OF THE INTERNATIONAL CONFERENCE ON IMAGE PROCESSING. (ICIP),US,LOS ALAMITOS, IEEE COMP. SOC. PRESS,23 October 1995 (1995-10-23), page 528-531 XP000623200 ISBN: 0-7803-3122-2 * page 529, left-hand column, line 14 - line 37 * | 3 | |

-/--

The present search report has been drawn up for all claims

| Place of search | Date of completion of the search | Examiner |
|---|---|---|
| BERLIN | 3 December 1999 | Deane, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**European Patent Office**

## EUROPEAN SEARCH REPORT

Application Number

EP 99 20 3041

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (Int.Cl.7) |
| P,A | PATENT ABSTRACTS OF JAPAN vol. 1999, no. 01, 29 January 1999 (1999-01-29) & JP 10 269338 A (DAINIPPON SCREEN MFG CO LTD), 9 October 1998 (1998-10-09) * abstract * ----- | 1,6,7,10 | |
| | | | TECHNICAL FIELDS SEARCHED (Int.Cl.7) |

The present search report has been drawn up for all claims

| Place of search | Date of completion of the search | Examiner |
|---|---|---|
| BERLIN | 3 December 1999 | Deane, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**ANNEX TO THE EUROPEAN SEARCH REPORT
ON EUROPEAN PATENT APPLICATION NO.**                    EP 99 20 3041

This annex lists the patent family members relating to the patent documents cited in the above-mentioned European search report.
The members are as contained in the European Patent Office EDP file on
The European Patent Office is in no way liable for these particulars which are merely given for the purpose of information.

03-12-1999

| Patent document cited in search report | Publication date | Patent family member(s) | Publication date |
|---|---|---|---|
| JP 10269338    A | 09-10-1998 | NONE | |